(19)

Europäisches
Patentamt
European
Patent Office
Office européen
des brevets

(11) **EP 2 081 042 A2**

(12) **EUROPEAN PATENT APPLICATION**

(43) Date of publication:
**22.07.2009 Bulletin 2009/30**

(51) Int Cl.:
***G01S 1/00*** *(2006.01)*     ***G01S 5/14*** *(2006.01)*

(21) Application number: **09150446.4**

(22) Date of filing: **13.01.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **15.01.2008 US 14650**

(71) Applicant: **Honeywell International Inc.**
**Morristown, NJ 07962 (US)**

(72) Inventors:
- **McDonald, James A.**
 **Honeywell International Inc.**
 **Morristown, NJ 07962 (US)**
- **Vanderwerf, Kevin D.**
 **Honeywell International Inc.**
 **Morristown, NJ 07962 (US)**

(74) Representative: **Buckley, Guy Julian**
**Patent Outsourcing Limited**
**1 King Street**
**Bakewell**
**Derbyshire DE45 1DZ (GB)**

(54) **Navigation system with apparatus for detecting accuracy failures**

(57) A navigation system (12) for a vehicle having a receiver (14) operable to receive a plurality of signals from a plurality of transmitters includes a processor (16) and a memory device (18). The memory device (18) has stored thereon machine-readable instructions that, when executed by the processor, enable the processor (16) to determine a set of pseudo-range measurements derived from the plurality of signals, employing at least one Kalman filter process, determine from the measurements an error covariance matrix for a main navigation solution, and using a solution separation technique, determine at least one protection level value based on sed on the error covariance matrix.

*FIG.1*

## Description

## BACKGROUND OF THE INVENTION

In addition to providing a navigation solution, navigation systems should also be able to provide users with timely warnings indicating when it is not safe/acceptable to use the navigation solution. A navigation system with this capability is, by definition, a navigation system with integrity.

With GPS for example, satellite failures can occur which result in unpredictable deterministic range errors on the failing satellite. Satellite failures are rare (i.e., on the order of 1 every year), but safety-critical navigation systems must account for these errors. Typically, navigation systems (e.g., GPS Receivers) provide integrity on their position solution (i.e., horizontal position and altitude), but do not provide integrity on other navigation parameters, such as ground speed and vertical velocity.

## SUMMARY OF THE INVENTION

In an embodiment of the invention, a navigation system for a vehicle having a receiver operable to receive a plurality of signals from a plurality of transmitters includes a processor and a memory device. The memory device has stored thereon machine-readable instructions that, when executed by the processor, enable the processor to determine a set of pseudo-range measurements derived from the plurality of signals, employing at least one Kalman filter process, determine from the measurements an error covariance matrix for a main navigation solution, and using a solution separation technique, determine at least one protection level value based on the error covariance matrix.

## BRIEF DESCRIPTION OF THE DRAWINGS

Preferred and alternative embodiments of the present invention are described in detail below with reference to the following drawings.

FIG. 1 shows a first navigation system incorporating embodiments of the present invention; and

FIG. 2 shows a second navigation system incorporating embodiments of the present invention;

FIG. 3 shows a process according to an embodiment of the invention;

FIG. 4 shows a process according to the embodiment illustrated in FIG 3; and

FIG. 5 shows a process according to the embodiment illustrated in FIG 3.

## DETAILED DESCRIPTION OF THE PREFERRED EMBODIMENT

An embodiment builds on many of the concepts applied to position integrity in order to provide integrity on the following navigation states: North Velocity, East Velocity, Ground Speed, Vertical Speed, Flight Path Angle, and Track Angle.

One or more embodiments may include a bank of filters/solutions (whether Kalman Filter or Least Squares) that may be composed of a main solution that processes all satellite measurements along with a set of sub-solutions; where each sub-solution processes one satellite fewer than the main solution.

Navigation systems primarily employ one of the following implementations in order to calculate a navigation solution: a Kalman Filter or a Least Squares Solution. In general, GPS receivers which have GPS satellite measurements (and possibly altitude aiding) use a Least Squares solution while Hybrid Inertial/GPS systems use a Kalman Filter. Both methods use a recursive algorithm which provides a solution via a weighted combination of predictions and measurements. However, a Least Squares Solution possesses minimal prediction capability and is therefore heavily influenced by measurements (in fact the weighting factor on predictions in a Least Squares Solution approaches zero with each iteration). A Kalman Filter on the other hand is able to take advantage of additional information about the problem; such as additional measurement data (e.g., inertial data) or additional information about system noise and/or measurement noise. This allows the Kalman Filter to continuously vary its weighting on its own predictions versus measurement inputs (this may be done via the Kalman Gain). A Kalman Filter with very low confidence in its own predictions (i.e., a very large Kalman Gain) will behave much like a Least Squares Solution.

The Error Covariance Matrix, often denoted by the symbol "P," within a navigation system represents the standard deviation of the error state estimates within a navigation solution. For example, given a 3x3 matrix representing the error covariance for the x, y, and z velocity states within a Kalman filter:

$$P = \begin{bmatrix} \sigma_x^2 & E\left[\sigma_x \sigma_y\right] & E\left[\sigma_x \sigma_z\right] \\ E\left[\sigma_y \sigma_x\right] & \sigma_y^2 & E\left[\sigma_y \sigma_z\right] \\ E\left[\sigma_z \sigma_x\right] & E\left[\sigma_z \sigma_y\right] & \sigma_z^2 \end{bmatrix}$$

We would expect (with a properly modeled Kalman Filter) that the absolute value of the difference between the true ground speed and the Kalman Filter's ground speed would not exceed $2\sqrt{\left(\sigma_x^2 + \sigma_y^2\right)}$ more than ~95% of the time. The same would be true for vertical velocity using $2\sqrt{\sigma_z^2}$ instead. Note the off diagonal terms here represent cross-correlation between the velocities (how a change in x-velocity impacts a change in y-velocity or z-velocity for example).

The Error Covariance Matrix may be a critical component of any fault detection and integrity limit algorithm. For a Kalman Filter, P may be a fundamental part of the recursive Kalman Filter process. A Kalman Filter navigation solution may not be produced without the P matrix. With a Least-Squares solution, calculation of the actual navigation solution may not require use of an error covariance matrix. Therefore, a Least Squares Solution may only produce a P matrix if it is desired to provide integrity with the navigation solution. Calculation of a P matrix for a Least Squares solution is based on the satellite geometry (line of sight from user to all satellites in view) and an estimate of the errors on the satellite measurements.

Once a navigation system has an error covariance matrix along with its actual navigation solution, fault detection and calculation of integrity can be performed via Solution Separation or Parity Space Based techniques.

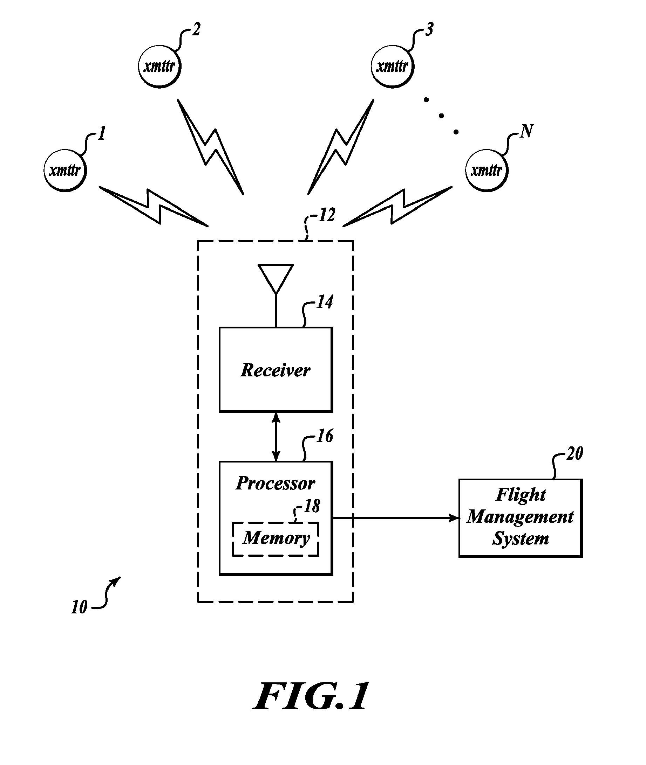

FIG. 1 shows a radio navigation system 10 incorporating features of an embodiment of the present invention. The system includes several transmitters 1-N and user set 12. Transmitters 1-N may be a subset of the NAVSTAR GPS constellation of satellite transmitters, with each transmitter visible from the antenna of user set 12. Transmitters 1-N broadcast N respective signals indicating respective transmitter positions and signal transmission times to user set 12.

User set 12, mounted to an aircraft (not shown), includes receiver 14, processor 16, and processor memory 18. Receiver 14, preferably NAVSTAR GPS compatible, receives the signals, extracts the position and time data, and provides pseudorange measurements to processor 16. From the pseudorange measurements, processor 16 can derive a position solution for the user set. Although the satellites can transmit their positions in World Geodetic System of 1984 (WGS-84) coordinates, a Cartesian earth-centered earth-fixed system, an embodiment determines the position solution in a local reference frame L, which is level with the north-east coordinate plane and tangential to the Earth. This frame choice, however, is not critical, since it is well-understood how to transform coordinates from one frame to another.

Processor 16 can also use the pseudorange measurements to detect satellite transmitter failures and to determine a worst-case error, or protection limit, both of which it outputs with the position solution to flight management system 20. Flight management system 20 compares the protection limit to an alarm limit corresponding to a particular aircraft flight phase. For example, during a pre-landing flight phase, such as nonprecision approach, the alarm limit (or allowable radial error) may be 0.3 nautical miles, but during a less-demanding oceanic flight phase, the alarm limit may be 2-10 nautical miles. (For more details on these limits, see RTCA publication DO-208, which is incorporated herein by reference.) If the protection limit exceeds the alarm limit, the flight management system, or its equivalent, announces or signals an integrity failure to a navigational display (not shown) in the cockpit of the aircraft. The processor also signals whether it has detected any satellite transmitter failures.

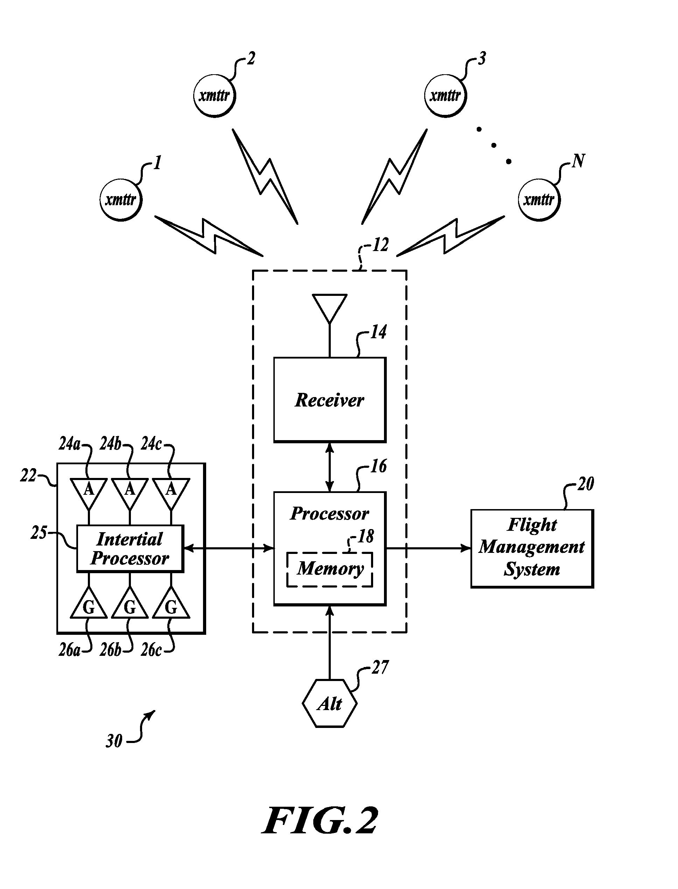

As shown in FIG. 2, a second embodiment extends the radio navigation system 10 of FIG. 1 with the addition of inertial reference unit 22 for providing inertial data to processor 16 and pressure altitude sensor 27 for providing altitude data to processor 16. The resulting combination constitutes a hybrid navigation system 30. (Altitude sensor 27 can also provide data to stabilize inertial reference unit, as known in the art, but for clarity the connection is not shown here.)

Inertial reference unit 22, mounted to the aircraft (not shown), preferably includes three accelerometers 24a-24c for measuring acceleration in three dimensions and three gyroscopes 26a-26c for measuring angular orientation, or attitude, relative a reference plane. Inertial reference unit 22 also includes inertial processor 25 which determines an inertial position solution $r_i$, preferably a three-element vector in an earth-fixed reference frame. Inertial processor 26 also preferably converts the acceleration data into raw acceleration vector $a_{raw}$ and attitude data into raw angular velocity vector $\omega_{raw}$. The preferred angular velocity vector defines the rotation of the body frame (fixed to the aircraft) in three dimensions, and the preferred inertial acceleration defines the three components of acceleration in body frame coordinates. Inertial processor 26 also determines a transformation matrix C for transforming body frame coordinates to local vertical frame L, a three-element rotation vector $\omega_{IE}$ which describes rotation of the earth-based frame E versus inertial frame I transformed to L frame, and rotation vector $\omega_{EL}$ which describes rotation of the L frame versus the earth-fixed frame E transformed to L frame. The details of this inertial processing are well known in the art.

While least-squares solutions provide a solution based on measurement inputs, Kalman Filters provide a solution based on a weighted combination of predictions and measurements. An embodiment of the invention involves the processor 16 determining integrity for: North Velocity, East Velocity, Groundspeed, Vertical Velocity, track angle, and flight path angle based on a hybrid solution which blends multiple position measurements via a Kalman Filter (e.g., GPS measurements blended with position/velocity data from an Inertial Reference System). An embodiment of the invention employs principles of a snapshot solution separation algorithm described in commonly owned U.S. Patent Application No. _____(Attorney Docket No. HOOO-1-1317), which is hereby incorporated by reference as if fully set forth herein, with a difference being the source of error covariance matrices. In this case the error covariance matrix is a direct by-product of the Kalman Filter process while for a snapshot solution it may be calculated via $\mathbf{P} = (\overline{\mathbf{H}^T\mathbf{H}})^{-1}$.

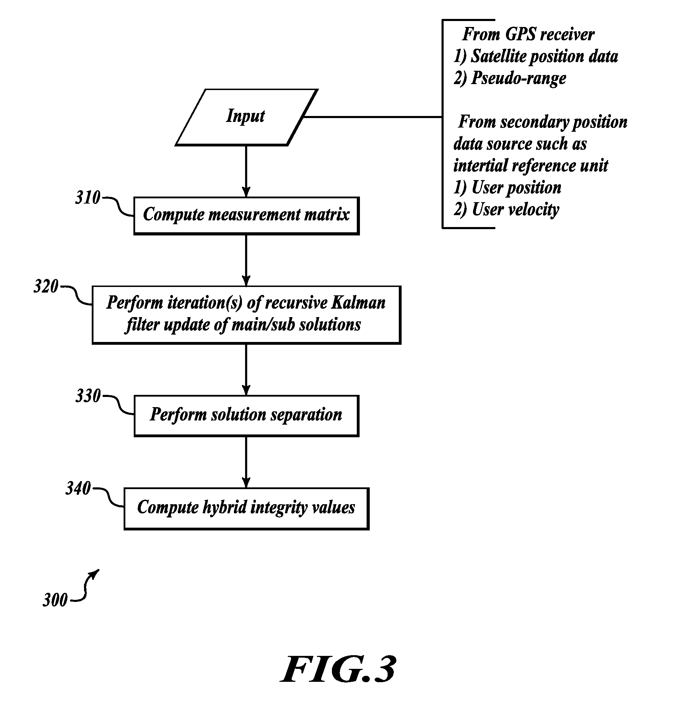

FIG. 3 illustrates a process 300, according to an embodiment of the invention, that can be implemented in one or both of systems 10 and 30. The process 300 is illustrated as a set of operations or steps shown as discrete blocks. The process 300 may be implemented in any suitable hardware, software, firmware, or combination thereof. As such the process 300 may be implemented in computer-executable instructions that can be transferred from one electronic device to a second electronic device via a communications medium. The order in which the operations are described is not to be necessarily construed as a limitation.

In an embodiment, and at a block 310, the processor 16 determines a measurement Matrix as follows:

$$\mathbf{H} = \begin{bmatrix} -LOS_{1x} & -LOS_{1y} & -LOS_{1z} & 1 \\ -LOS_{2x} & -LOS_{2y} & -LOS_{2z} & 1 \\ \vdots & \vdots & \vdots & \vdots \\ -LOS_{Nx} & -LOS_{Ny} & -LOS_{Nz} & 1 \end{bmatrix}$$

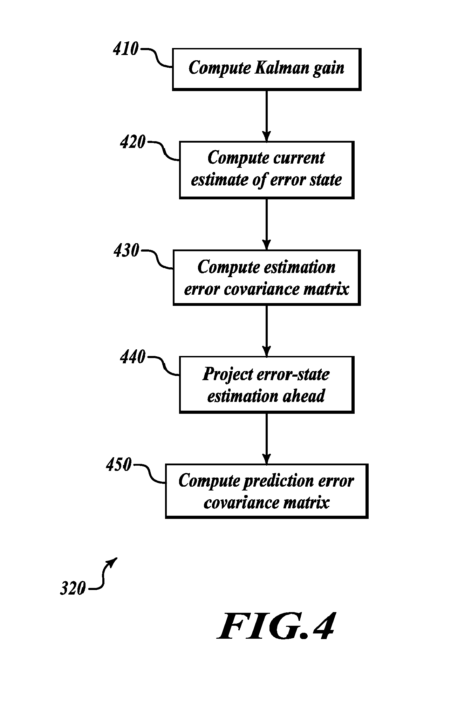

In an embodiment, and at a block 320, the processor 16 determines an error state covariance matrix P used for a solution separation process described hereinafter. The error covariance matrix P may be determined as a result of a recursive Kalman Filter process illustrated and described in greater detail with reference to FIG. 4.

Note that $\Delta\hat{x}_k^-$ represents the error state and $P_k^-$ the error state covariance from a previous iteration of the recursive Kalman Filter process.

Referring now to FIG. 4, at a block 410, the processor 16 computes the Kalman Gain as follows:

$$K_k = P_k^- H_k^T \left( H_k P_k^- H_k^T + R_k \right)^{-1}$$

where $R_k$ represents the Measurement Noise Covariance matrix.

At a block 420, the processor 16 computes the current estimate of the error state based on the current measurements according to the following:

$$\Delta\hat{x}_k = \Delta\hat{x}_k^- + K_k \left( \Delta z_k - H_k \Delta\hat{x}_k^- \right)$$

where $\Delta z_k$ represents the current measurements. Note that $H_k \Delta\hat{x}_k^-$ represents the Kalman Filter's prediction of the current measurements. The difference $\left( \Delta z_k - H_k \Delta\hat{x}_k^- \right)$ may be referred to as the innovations or measurement residuals.

At a block 430, the processor 16 computes the estimation error covariance matrix as follows:

$$P_k = \left( I - K_k H_k \right) P_k^-$$

At a block 440, the processor 16 projects the estimate of the error state ahead to the next time step as follows:

$$\Delta\hat{x}_{k+1}^- = \Phi_k \Delta\hat{x}_k$$

where $\Phi_k$ represents the state transition matrix

At a block 450, the processor 16 computes the prediction error covariance matrix (this represents the P matrix used for solution separation):

$$P_{k+1}^- = \Phi_k P_k \Phi_k^T + Q_k$$

where $Q_k$ represents the system (also referred to as process) noise covariance matrix.

After completing block 450, the process 300 of FIG. 3 continues to a block 330. Alternatively, the process illustrated in FIG. 4 returns to block 410 to repeat the above-described steps.

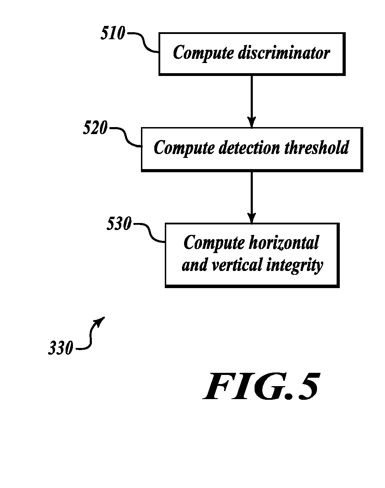

Referring back to FIG. 3, at a block 330, the processor 16 performs a solution separation process. Referring now to FIG. 5, at a block 510, the processor 16 calculates a discriminator between main solution (subscript 0) and sub-solution j according to the following:

$$dx_j = \Delta\hat{x}_0 - \Delta\hat{x}_j$$
$$d_j^{horz} = \sqrt{\left[ dx_j(1) \right]^2 + \left[ dx_j(2) \right]^2}$$

At a block 520, the processor 16 calculates a detection threshold according to the following:

$$D_j^{horz} = \sigma_{d_j^{horz}} Q^{-1} \left( \frac{p_{fa}}{2N_{sol}} \right) = \sigma_{d_j^{horz}} \cdot K_{fa} \left( N_{sol} \right)$$

If the discriminator exceeds the threshold for any main/sub-solution combination, a satellite failure exists.

At a block 530, the processor 16 calculates the horizontal and vertical integrity for main least-squares solution according to the following:

$$a_{0n}^{horz} = \sigma_{horz\_max} Q^{-1} \left( p_{md} \right) = \sigma_{horz\_max} K_{md}$$

$$\text{HVPL}_j = D_j^{horz} + a_j^{horz}$$

And similarly for vertical integrity:

$$\text{VVPL}_j = D_j^{vert} + a_j^{vert}$$

In an embodiment, HVPL and VVPL are based on the max values for all main/sub-solution combinations.

Note that $\sigma_{d_j^{horz}}$ and $\sigma_{horz\_max}$ are based on the error covariance matrices (using the horizontal and vertical velocity states) calculated for the main and sub-solutions at block 450 discussed above.

Referring back to FIG. 3, at a block 340, the processor 16 calculates track angle, and flight path angle integrity values for hybrid solution.

The hybrid North Velocity, East Velocity, and Ground Speed Integrity are all represented by HVPL calculated above. VVPL represents the hybrid integrity on the vertical velocity.

Track Angle and Flight Path Angle integrity values are defined as follows:

Track Angle:

$$TAPL_{Hybrid} = \left(\frac{180}{\pi}\right)\frac{HVPL}{V_{Hybrid}^{GroundSpeed}}$$

Flight Path Angle:

$$FPAPL_{Hybrid} = \left(\frac{180}{\pi}\right)\frac{VVPL}{V_{Hybrid}^{GroundSpeed}}$$

where $V_{Hybrid}^{GroundSpeed}$ represents the hybrid ground speed.

While a preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

The embodiments of the invention in which an exclusive property or privilege is claimed are defined as follows:

## Claims

1. A navigation system (12) for a vehicle having a receiver (14) operable to receive a plurality of signals from a plurality of transmitters, the navigation system comprising:

   a processor (16); and
   a memory device (18) having stored thereon machine-readable instructions that, when executed by the processor, enable the processor (16) to:
   determine a set of pseudo-range measurements derived from the plurality of signals,
   employing at least one Kalman filter process, determine from the measurements an error covariance matrix for a main navigation solution including associated data characterizing at least one velocity state of the vehicle, and
   using a solution separation technique, determine at least one protection level value based on the error covariance matrix.

2. The system (12) of claim 1 wherein the instructions further enable the processor (16) to determine a set of error estimates corresponding to delta pseudo-range measurements derived from the plurality of signals.

3. The system (12) of claim 1 wherein the instructions further enable the processor (16) to determine an error covariance matrix for at least one navigation sub-solution.

4. The system (12) of claim 3 wherein determining at least one protection level value comprises determining a plurality of solution separation parameters, each solution separation parameter being based on statistics of a separation between the main navigation solution and a respective navigation sub-solution.

5. The system (12) of claim 4 wherein determining at least one protection level value further comprises determining an error bound for the main navigation solution based on at least one of the solution separation parameters.

6. The system (12) of claim 4 wherein determining at least one protection level value further comprises determining each solution separation parameter from a respective covariance matrix describing the statistics of the separation between the main navigation solution and the respective navigation sub-solution.

7. The system (12) of claim 1 wherein the at least one protection level value comprises a vertical-velocity integrity value.

8. The system (12) of claim 1 wherein the at least one protection level value comprises a flight-path-angle integrity value.

9. The system (12) of claim 1 wherein the at least one protection level value comprises a track-angle integrity value.

10. A navigation system (12) for a vehicle having a receiver (14) operable to receive a plurality of signals from a plurality of transmitters, the navigation system comprising:

a processor (16); and
a memory device (18) having stored thereon machine-readable instructions that, when executed by the processor, enable the processor (16) to:
determine from the plurality of signals an error covariance matrix for a main navigation solution,
determine from the matrix a set of values corresponding to horizontal and vertical velocity states of the vehicle, and
based on said set of values, determine at least one protection level value associated with said velocity states.

**FIG.1**

**FIG.2**

From GPS receiver
1) Satellite position data
2) Pseudo-range

From secondary position
data source such as
intertial reference unit
1) User position
2) User velocity

*Input*

310 — *Compute measurement matrix*

320 — *Perform iteration(s) of recursive Kalman filter update of main/sub solutions*

330 — *Perform solution separation*

340 — *Compute hybrid integrity values*

300

# FIG.3

410 — Compute Kalman gain

420 — Compute current
estimate of error state

430 — Compute estimation
error covariance matrix

440 — Project error-state
estimation ahead

450 — Compute prediction error
covariance matrix

320 —

# FIG.4

510 — Compute discriminator

520 — Compute detection threshold

530 — Compute horizontal and vertical integrity

330

*FIG.5*